Europäisches Patentamt

European Patent Office

Office européen des brevets

(11) Publication number: **0 228 983**
A2

# (12) EUROPEAN PATENT APPLICATION

(21) Application number: 86630178.1

(22) Date of filing: 25.11.86

(51) Int. Cl.⁴: **H 01 M 2/34**
H 01 M 2/04, H 01 M 10/42

(30) Priority: 02.12.85 US 803338

(43) Date of publication of application:
15.07.87 Bulletin 87/29

(84) Designated Contracting States:
AT CH DE FR GB IT LI NL

(71) Applicant: EMERSON ELECTRIC CO.
8100 W. Florissant Avenue
St. Louis Missouri 63136 (US)

(72) Inventor: Bowsky, Benjamin
8379 Island Lane
Mainville Ohio 45039 (US)

(74) Representative: Waxweiler, Jean et al
OFFICE DENNEMEYER S.à.r.l. P.O. Box 1502
L-1015 Luxembourg (LU)

(54) Hermetically sealed battery cover assembly.

(57) An improved hermetically sealed battery cover assembly for an electric battery, the battery cover assembly including a terminal post extending through an hermetic seal in the battery cover and a current protector integrally incorporated therewith as part of the battery cover assembly to regulate current flow in response to changes in current and temperature conditions.

FIG. I

EP 0 228 983 A2

**Description**

HERMETICALLY SEALED BATTERY COVER ASSEMBLY

The present invention relates to hermetic terminal assemblies for electric batteries and more particularly to an improved battery cover assembly therefor.

It has been well known in the electrical battery art to provide circuit protection devices which can be wired into the battery circuit to protect the battery. More recently these circuit protection devices have included positive temperature coefficient (PTC) elements which have been wired into the electrical circuit to provide an automatic guard for excessive changes in battery temperature and current discharges. Such devices are disclosed in U.S. patent No. 4 238 812 , issued to Lee M. Middleman on December 9, 1980 and U.S. patent No. 4 255 698, issued to Henry I. Simon on March 10,1981. This latter patent teaches the incorporation of such a positive temperature coefficient (PTC) device as a permanent part of the battery by sandwiching such device into a battery housing between electrodes disposed therein, electrically wiring the device to the electrodes and encapsulating the protector device, the electrodes and the ends of the leads. Such an arrangement is comparatively complex and costly in manufacture and assembly and vulnerable to defects in assembly, electrical connection, encapsulation procedures, vibration and impact or shock.

In accordance with the present invention, a battery current protection device is provided in an improved assembly arrangement which provides for the device to be a permanent part of the battery, permitting straightforward and economical manufacturing and assembly with minimum defect occurrence, which utilizes previously required hermetic seals to include encapsulation of the protective device, if desired, with a minimum of manufacturing operations, and which permits ready determination and replacement of a minimum of parts in the event of manufacturing problems. In addition, the structure of the present invention allows for ready and assured stable incorportion of a protection device in the manufacture of small button-type batteries, such as of the lithium type, permitting a comparatively easy and stable inclusion of any one of several known current protection devices as a permanent part of such small button-type battery by utilizing the cover assembly thereof with a minimum demand on valuable space but at the same time providing improved operation in the event of shock or vibration.

More particularly the present invention provides, in an hermetically sealed battery, an improved battery cover assembly therefor, the battery cover assembly comprising : a battery cover; an electrode post extending in sealed relation through an hermetic seal in the battery cover for electrical connection to an external load to be electrically powered by the battery; and a current protection means integrally incorporated as part of the battery cover assembly to regulate current flow in said battery responsive to changes in current and temperature conditions, the current protection means including an electrically conductive joint to electrically bond the current protection means to the battery cover assembly.

Various other features of the present invention will become obvious to one skilled in the art upon reading the disclosure of the invention as set forth herein and as illustrated in the accompanying drawing wherein :

Figure 1 is a cross-sectional view of one advantageous embodiment of the present invention, incorporating a current protector as part of an hermetically sealed battery cover assembly;

Figure 2 is a cross-sectional view of another embodiment of the present invention incorporating a current protector as part of an hermetically sealed battery cover assembly.

Figure 3 is an enlarged cross-sectional view of a portion of the structure of Figure 2 taken at line 3-3 of Figure 2;

Figure 4 is a cross-sectional view of still another embodiment of the present invention;

Figure 5 is an enlarged cross-sectional view of a portion of the structure of Figure 4, taken at line 5-5 of Figure 4;

Figure 6 is an enlarged cross-sectional view of a portion of structure similar to the view of Figure 5, disclosing a further modification of such structure; and

Figures 7 and 8 are cross-sectional views of portions of structure similar to the views of Figure 5 and 6, disclosing still further embodiments of the present invention.

Referring to Figure I of the drawings, battery cover assembly 2 is disclosed as including a battery cover 3, which can be of plated or stainless steel or other suitable types of electrically conductive material known in the art, the cover 3 having a central aperture disposed therein through which the cylindrical electrode or terminal post 4 passes. The electrode 4 is hermetically sealed to cover 3 by a suitable glass or ceramic seal 6, as is known in the art. In accordance with one embodiment of the present invention, an annular current protection ring device 7 surrounds and is fixed to the outer extremity of electrode 4. As shown in Figure I, the inner and outer side walls of annular current protection device 7 are surroundingly faced with suitable electrically conductive metallic foil material 8, such as nickel, which foil is bonded or joined to the current protection device 7 and to electrode 4 by a conductive epoxy or solder joint. If desired, a non-conductive or insulating facing cap 9 can also be joined to the outer extremities of post 9 and the outer edges of the surrounding current protective device or jacket. It is to be understood that non-conductive cap 9 can also be omitted to permit a ready by-pass of the current protection device if so desired when the battery is connected to a load.

The protective device disclosed serves as a current protector that self regulates current flow to match temperature and current conditions and to sense and react to battery self heating. Any one of several known conductive polymer compositions which is low in resistance state under normal operating conditions but which changes to a high resistance state when the temperature and/or current becomes excessive can be utilized to provide a positive temperature coefficient (PTC) current protection device integral and stable with battery cover assembly 3 to protect the battery with which it is associated during discharge as well as during charging. In this regard, it also is to be understood that the particular material for the current protection device 8 can be varied in accordance with the design criteria demanded of the battery.

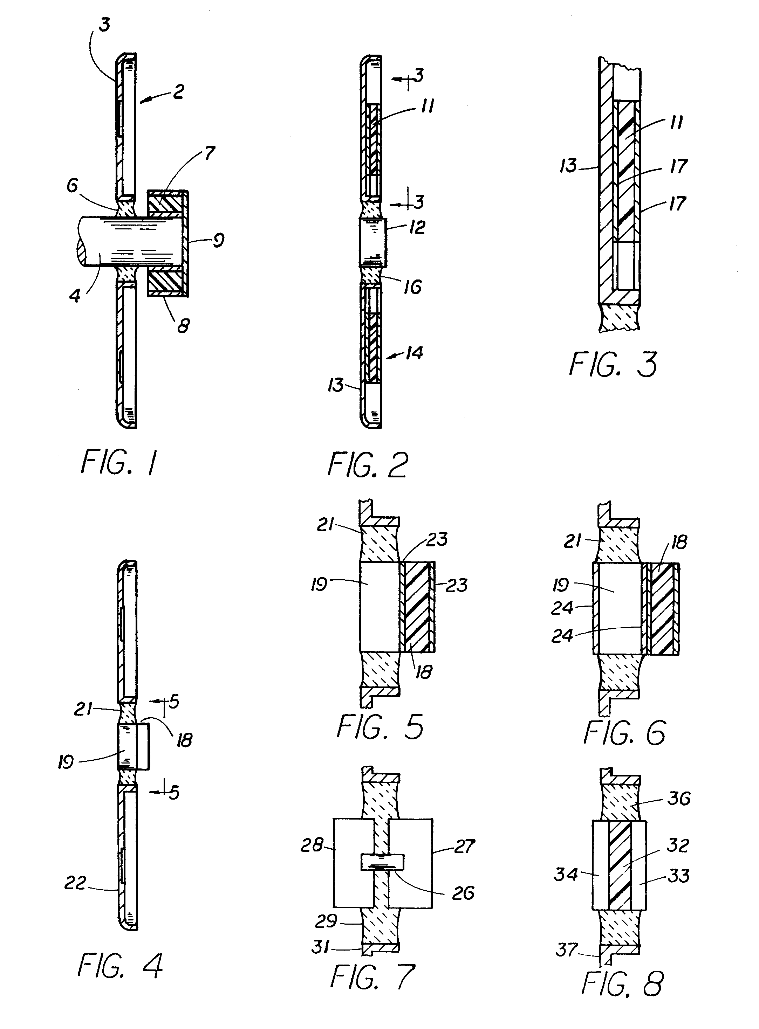

Referring to Figures 2 and 3 of the drawings, another embodiment of the present invention is disclosed. In this embodiment, the current protection device is in the form of an annular disc II. Disc II surrounds electrode post I2 which passes through battery cover I3 of battery cover assembly I4, the disc II being so sized to be in spaced, insulated relation from electrode post I2. A suitable glass or ceramic seal I6 hermetically seals post I2 to battery cover I3. As can be seen in Figure 3, annular protection device II is provided on opposite faces thereof with conforming electrically conductive annular discs I7 which can be formed from a suitable electrically conductive metallic foil material, such as nickel. The conforming discs I7 are bonded or joined to disc II by a conductive epoxy or solder joint with the inner disc I7- that is the one proximate the battery cover I3- in turn, being similarly bonded to the outer face of battery cover I3.

Referring to Figures 4 to 6 which disclose further embodiments of the present invention, the current protection device is disclosed as being in the form of a cap or sheet I8 which geometrically conforms to the cross-section of electrode post I9 extending through the hermetic seal 2I between post I9 and cover plate 22. As can be seen more clearly in Figure 5, protective device I8 is provided on opposite faces thereof with conforming, electrically conductive sheets or caps 23 which also can be formed from a suitable electrically conductive metallic foil material, such as nickel. The conforming sheets are bonded or joined to the opposed faces of sheet I8 by a conductive epoxy or solder joint with the inner face being similarly bonded to the extremity of electrode post I9 either directly (Figure 5) or through electrically conductive sheets or caps 24 which are joined or bonded in similar fashion to the opposed faces of electrode post I9 (Figure 6). As abovedescribed, a suitable conductive epoxy or solder joint can be used to accomplish the electrical joinder.

Referring to Figures 7 and 8, two other embodiments of the present invention are schematically disclosed to show the current protection device embedded or encapsulated in the hermetic seal between the battery cover and electrode post of the battery cover assembly. Although in these two embodiments, the current protection device is shown as suitably electrically bonded directly to the terminal post, it is to be understood that appropriately conforming electrically conductive metallic sheets, such as aforedescribed, can be provided in the facing parts. It will be noted that in the structure of Figure 7, the current conductive device 26, which can be of a suitably selected positive temperature coefficient material as aforedescribed is nested in opposed slots of spaced electrode portions 27 and 28 of the electrode post. A portion of the side walls of spaced electrode portions 27 and 28 and the protective device 26 are, in turn, encapsulated in hermetic seal 29 between the post and battery cover 3I. In Figure 8, the current protection device 32 is geometrically conformed to and sandwiched between spaced post portions 33 and 34 of the electrode post. The sandwich, in turn, comprised of the side walls of spaced electrode portions 33 and 34 and protective device 32 are encapsulated in hermetic seal 36 extending between the electrode post and battery cover 37.

From the above descriptions , it can be seen that a unique and novel battery cover assembly is provided which incorporates a current protection device in a stable manner with a minimum usage of space to reduce manufacturing and assembly operations and to further insure continued battery operations notwithstanding normal impact and vibrations of surrounding environment.

## Claims

1. A battery cover assembly for an hermetically sealed battery, comprising: a battery cover; an electrode post extending in sealed relation through an hermetic seal in said battery cover for electrical connection to an external load to be electrically powered by said battery; and a current protection means integrally incorporated as part of said battery cover assembly to regulate current flow in said battery responsive to changes in current and temperature conditions, said current protection means including an electrically conductive joint electrically bonding said current protection means to said battery cover assembly.

2. The battery cover assembly of claim I , wherein said current protection means comprises a positive temperature coefficient (PTC) material.

3. The battery cover assembly of claim I, wherein said electrically conductive joint is an electrically conductive, bonding, epoxy , chemical compound.

4. The battery cover assembly of claim I, wherein said electrically conductive joint is an electrically conductive solder.

5. The battery cover assembly of claim I, wherein said current protection means is electrically joined to said battery cover of said battery cover assembly, and said battery cover is electrically conductive.

6. The battery cover assembly of claim I, wherein said current protection means is joined to said electrode post of said battery cover assembly.

7. The battery cover assembly of claim I, wherein said current protection means is encapsulated at least in part in said hermetic seal of said battery cover assembly.

8. The battery cover assembly of claim I, wherein said current protection means is in the form of an annular disc surrounding said electrode post of said battery cover assembly in spaced, insulated relation therefrom, said annular disc is electrically joined on one face to said battery cover of said battery cover assembly and has an electrically conductive material on the opposite face thereof, and said battery cover being electrically conductive.

9. The battery cover assembly of claim I, wherein said current protection means is in sheet form geometrically conforming to the cross-section of said electrode post extending through said hermetic seal and said sheet is joined in facing relation with the outside extremity of said electrode post and has an electrically conductive material on the opposite face thereof.

I0. The battery cover assembly of claim I, wherein said current protection means is in annular ring current protector form with the inner side wall thereof geometrically conforming and joined to the outer side wall of said electrode post extending through said hermetic seal, and said annular ring current protector has an electrically conductive material bonded to the outer side wall thereof.

II. The battery cover assembly of claim I, wherein said current protection means is totally embedded in said hermetic seal and positioned intermediate and electrically joined to spaced opposed segments of said terminal post extending through said hermetic seal.

I2. A battery cover assembly for an hermetically sealed button-type battery comprising: a battery cover; a cylindrical electrode post extending centrally in sealed relation through an hermetic seal in said battery cover for electrical connection to an external load to be electrically powered by said battery; an annular current protection ring of positive temperature coefficient material surrounding and conforming with the outside side wall of said cylindrical electrode post; a first electrically conductive metallic sheet disposed between said electrode post and said inner side wall of said current protection ring with one face electrically bonded to said post and the other to said ring and a second metallic sheet surrounding the outer side wall of said current protection ring with the inner face of said metallic sheet electrically bonded to the outer side wall of said ring.

I3. A battery cover assembly for an hermetically sealed button-type battery, comprising a battery cover; a cylindrical electrode post extending centrally in sealed relation through an hermetic seal in said battery cover for electrical connection to an external load to be electrically powered by said battery; a current protection cap of positive temperature coefficient material sized to conform with the cross-sectional area of said electrode post; and a pair of electrically conductive metallic sheets electrically bonded to the opposite faces of said cap to sandwich said cap therebetween, said sandwich being electrically bonded to the outer face extremity of said electrode post.

0228983

FIG. 1

FIG. 2

FIG. 3

FIG. 4

FIG. 5

FIG. 6

FIG. 7

FIG. 8